# EUROPÄISCHE PATENTSCHRIFT

(11) **EP 1 131 879 B1**
(45) Veröffentlichungstag und Bekanntmachung des Hinweises auf die Patenterteilung: **08.01.2003**
(21) Anmeldenummer: 99972797.7
(22) Anmeldetag: 10.09.1999
(51) Int. Cl.: H02K 7/08

(54) **ANTRIEBSVORRICHTUNG, INSBESONDERE FÜR EINE SCHEIBENWISCHANLAGE EINES KRAFTFAHRZEUGES**
DRIVING DEVICE MAINLY INTENDED FOR THE WIPER SYSTEM OF A MOTOR VEHICLE
DISPOSITIF D'ENTRAINEMENT, NOTAMMENT POUR UN SYSTEME D'ESSUIE-GLACE D'UN VEHICULE AUTOMOBILE

(30) Priorität: 26.11.1998 DE 19854535
(43) Veröffentlichungstag der Anmeldung: 12.09.2001
(73) Patentinhaber: Valeo Wischersysteme GmbH, 74321 Bietigheim-Bissingen (DE)
(72) Erfinder: WALTHER, Bernd, D-74321 Bietigheim-Bissingen (DE)
(74) Vertreter: Jahn, Wolf-Diethart
(86) Internationale Anmeldenummer: EP9906683
(87) Internationale Veröffentlichungsnummer: WO00031856

(56) Entgegenhaltungen:
- US-A- 3 549 218
- US-A- 3 848 477
- US-A- 5 027 024

## Beschreibung

Die vorliegende Erfindung betrifft eine Antriebsvorrichtung, insbesondere für eine Scheibenwischanlage eines Kraftfahrzeuges mit den Merkmalen des Oberbegriffs des Anspruchs 1.

Die US-A-3 549 218 und US-A-5 027 024 offenbaren eine derartige Antriebsvorrichtung.

Das Gehäuse der Antriebsvorrichtung ist unterteilt in einen Teil, in dem der Elektromotor angeordnet ist, und in einen Teil, in dem die Getriebeeinheit angeordnet ist. Der Teil des Gehäuses, in dem der Elektromotor angeordnet ist, wird im folgenden als Motorgehäuse bezeichnet, der Teil des Gehäuses, in dem die Getriebeeinheit angeordnet ist, wird als Getriebegehäuse bezeichnet.

Eine derartige Antriebsvorrichtung ist bspw. aus der deutschen Patentanmeldung 196 52 929 bekannt. Die dort offenbarte Antriebsvorrichtung dient insbesondere zum Antrieb einer Scheibenwischanlage eines Kraftfahrzeugs. Sie weist einen Elektromotor auf, der an ein Getriebegehäuse angeflanscht ist. Der Elektromotor weist eine Ankerwelle auf, die mit ihrem freien Ende in das Getriebegehäuse hineinragt. Das freie Ende der Ankerwelle weist eine Schneckenwelle zum Antrieb eines Schneckenrades einer in dem Getriebgehäuse untergebrachten Getriebeeinheit auf.

Die schrägen Flanken der Schneckenwelle und des Schneckenrades führen während des Betriebs der Antriebsvorrichtung zu einer auf die Ankerwelle wirkenden Axialkraft. Die Richtung der Axialkraft ist abhängig von der Drehrichtung der Ankerwelle. In den Umkehrlagen des Scheibenwischers dreht sich die Richtung der Axialkraft an der Antriebswelle kurzfristig um, weil die Getriebeeinheit in umgekehrter Kraftrichtung beansprucht wird. Aufgrund von Fertigungstoleranzen der Einzelteile der Antriebsvorrichtung und aufgrund eines betriebsbedingten Verschleißes im Bereich der Axiallagerung der Antriebswelle kann es zu einem relativ großen Axialspiel der Antriebswelle in ihrer Axiallagerung kommen. Durch das Axialspiel kann es bei einer Richtungsumkehr des Scheibenwischers zu einer ruckartigen Axialbewegung der Ankerwelle kommen, die zu störenden Geräuschen führt.

Um dieses Axialspiel zu reduzieren, ist bei der bekannten Antriebsvorrichtung die Ankerwelle mittels zwei Wälzlager, zu beiden Seiten der Schneckenwelle, gelagert. Die Wälzlager weisen einen auf der Ankerwelle angeordneten Lagerinnenring und einen mit dem Getriebegehäuse ortsfest verbundenen Lageraußenring auf. Der Lagerinnenring eines der beiden Wälzlager ist verschiebbar auf der Ankerwelle angeordnet. An dem Lagerinnenring stützt sich eine Axialkrafterzeugungseinrichtung ab und beaufschlagt die Ankerwelle mit einer Axialkraft relativ zu dem Lagerinnenring. Im Bereich des anderen Wälzlagers ist eine Abstützscheibe auf der Ankerwelle ortsfest angeordnet. Der Lagerinnenring des anderen Wälzlagers ist über die Abstützscheibe derart an der Ankerwelle abgestützt, daß er die auf die Ankerwelle wirkende Axialkraft auf den Lagerinnenring des anderen Wälzlagers übertragt. Auf diese Weise wird die Ankerwelle zwischen den Wälzlagern in axialer Richtung verspannt. Die Verspannkräfte werden über die Wälzlager in das Getriebegehäuse geleitet.

Somit ist die Ankerwelle relativ zu dem Getriebegehäuse in axialer Richtung positioniert.

Die Axialkrafterzeugungseinrichtung weist ein Federelement auf, das mit dem einem Ende an der Ankerwelle und mit dem anderen Ende an dem Lagerinnenring des einen Wälzlagers abgestützt ist. Das Federelement der Axialkrafterzeugungseinrichtung muß die gesamten, während des Betriebs der Antriebsvorrichtung auftretenden, in Richtung der Getriebeeinheit wirkenden Axialkräfte der Ankerwelle aufnehmen. Außerdem erfordert diese bekannte Antriebsvorrichtung den Einsatz von mindestens zwei Wälzlagern, zwischen denen die Ankerwelle verspannt werden kann.

Die Aufgabe der vorliegenden Erfindung besteht darin, die Antriebsvorrichtung der eingangs genannten Art dahingehend weiterzubilden und auszugestalten, daß sie möglichst einfach aufgebaut ist, daß die Axialkrafterzeugungseinrichtung nicht die gesamten Axialkräfte der Ankerwelle aufnehmen muß und daß sie das Axialspiel der Ankerwelle dennoch sicher ausgleichen kann.

Diese Aufgabe wird erfindungsgemäß durch die Merkmale von Auspruch 1 gelöst.

Bei der erfindungsgemäßen Antriebsvorrichtung kann die Ankerwelle über das Getriebegehäuse oder das Motorgehäuse gegen das Stützlager abgestützt sein. Je nach dem ist das Stützlager entweder in dem Motorgehäuse oder in dem Getriebegehäuse angeordnet. Der Keilschieber ist stets derart angeordnet und ausgebildet, daß er die Ankerwelle mit einer Axialkraft beaufschlagt, die in Richtung auf das Stützlager gerichtet ist.

Die erfindungsgemäße Antriebsvorrichtung ist einfach aufgebaut. Die Axialkrafterzeugungseinrichtung der Antriebsvorrichtung muß nicht die gesamten Axialkräfte der Ankerwelle aufnehmen. Die Neigung des Keilschiebers kann derart gewählt werden, daß die auf die Ankerwelle wirkenden Axialkräfte von dem Keilschieber in wesentlich kleinere Verschiebekräfte in radialer Richtung umgelenkt werden. Außerdem kann die erfindungsgemäße Antriebsvorrichtung das Axialspiel der Ankerwelle sicher ausgleichen.

Gemäß einer vorteilhaften Weiterbildung der Erfindung ist die Ankerwelle in einem Wälzlager mit einem auf der Ankerwelle angeordneten Lagerinnenring und einem in dem Gehäuse angeordneten Lageraußenring gelagert. Erst die erfindungsgemäße Antriebsvorrichtung ermöglicht einen sicheren Ausgleich des Axialspiels der Ankerwelle beim Einsatz lediglich eines Wälzlagers. Dadurch kann die Antriebsvorrichtung mit weniger bewegten Teilen realisiert werden. Das führt zu einer höheren Verfügbarkeit und zu geringeren Herstellungskosten der erfindungsgemäßen Antriebsvorrichtung. Das Wälzlager ist vorteilhafterweise zwischen der Schneckenwelle und dem Elektromotor angeordnet.

Gemäß einer anderen bevorzugten Weiterbildung der vorliegenden Erfindung wird vorgeschlagen, daß der Lageraußenring axial verschiebbar in dem Gehäuse gelagert ist und daß der Keilschieber den Lageraußenring mit einer in Richtung auf das Stützlager gerichteten Axialkraft beaufschlagt.

Vorteilhafterweise ist der Lagerinnenring auf der Ankerwelle ortsfest angeordnet, so daß er eine auf den Lageraußenring wirkende Axialkraft auf die Ankerwelle übertragen kann. Der Lagerinnenring ist bspw. mittels eines Preßsitzes auf der Ankerwelle befestigt. Die von der Axialkrafterzeugungseinrichtung auf den Lageraußenring des Wälzlagers in Richtung auf das Stützlager wirkende Axialkraft kann somit über das Wälzlager auf die Ankerwelle übertragen werden. Die Ankerwelle ist somit in dem Gehäuse in axialer Richtung zwischen der Axialkrafterzeugungseinrichtung und dem Stützlager verspannt angeordnet, ohne daß dadurch die Dreheigenschaften der Ankerwelle beeinträchtigt werden.

Gemäß einer bevorzugten Ausführungsform ist auf,der Ankerwelle auf der dem Keilschieber entgegengesetzten Seite des Wälzlagers eine Abstützscheibe ortsfest angeordnet. Die Abstützscheibe ist auf der dem Stützlager zugewandten Seite des Wälzlagers angeordnet. Der Lagerinnenring des Wälzlagers kann sich an der Abtützscheibe abstützen. Dadurch kann die auf das Wälzlager wirkende Axialkraft sicher von dem Lagerinnenring auf die Ankerwelle übertragen werden.

Die Abstützscheibe ist vorzugsweise als ein Klemmring ausgebildet, der in einer in der Ankerwelle ausgebildeten Ringnut auf der Ankerwelle angeordnet ist. Eine derart ausgebildete Abstützscheibe kann einfach montiert werden und ist gegen axiales Verschieben auf der Ankerwelle gesichert.

Gemäß einer besonders bevorzugten Weiterbildung der Erfindung ist der Keilschieber im wesentlichen U-förmig ausgebildet, wobei die Ankerwelle in dem Spalt zwischen den beiden parallelen Balken des U verläuft. Auf diese Weise wird sichergestellt, daß der Keilschieber im Bereich der beiden Balken symmetrisch auf den Lageraußenring wirkt und diesen gleichmäßig mit einer auf das Stützlager gerichteten Axialkraft beaufschlagt.

Gemäß einer vorteilhaften Ausführungsform wird vorgeschlagen, daß das Gehäuse einen sich radial nach innen erstreckenden kragenförmigen Bereich aufweist, durch den die Ankerwelle verläuft und an dem sich der Keilschieber abstützt. An diesem Bereich kann sich der Keilschieber großflächig an dem Gehäuse abstützen.

Die Oberfläche des kragenförmigen Bereichs, auf der sich der Keilschieber abstützt, weist vorteilhafterweise eine Schräge auf, die der Schräge der Oberfläche des Keilschiebers entspricht, an der er sich an dem kragenförmigen Bereich abstützt. Die Oberfläche des Keilschiebers, die sich an dem Lageraußenring abstützt, verläuft senkrecht zu der Ankerwelle und liegt somit großflächig an dem Lageraußenring an. Durch Verschieben des Keilschiebers in radialer Richtung relativ zu der Ankerwelle gleitet der Keilschieber entlang der Schräge des kragenförmigen Bereichs. Dadurch wird dem Keilschieber neben der radialen Verschiebebewegung auch eine Bewegung in axialer Richtung aufgezwungen. Durch diese Bewegung des Keilschiebers in axialer Richtung wird der Lageraußenring mit einer Axialkraft in Richtung auf das Stützlager beaufschlagt.

Es ist denkbar, den Keilschieber mittels eines Schraubenelements oder anderer manueller Verstellmittel mit einer Verschiebekraft zu beaufschlagen. Auf diese Weise könnte eine gewünschte Verschiebekraft und damit auch eine gewünschte Axialkraft bspw. bei der Fertigung der Antriebsvorrichtung fest eingestellt werden. Allerdings kann sich das Axialspiel der Ankerwelle durch einen betriebsbedingten Verschleiß der Axiallagerelemente der Antriebswelle oder des Stützlagers mit der Zeit vergrößern. Dann müßte beim Einsatz manueller Verstellmittel die auf den Keilschieber wirkende Verschiebekraft neu eingestellt werden. Aus diesem Grund ist eine sich selbsttätig nachstellende Axialkrafterzeugungsvorrichtung besonders vorteilhaft. Deshalb schlägt die Erfindung gemäß einer besonders bevorzugten Ausführungsform vor, daß der Keilschieber mittels eines Federelements mit einer Verschiebekraft beaufschlagt ist.

Das Federelement ist vorzugsweise als eine Spiralfeder ausgebildet. Alternativ wird vorgeschlagen, daß das Federelement als eine Blattfeder ausgebildet ist. Durch eine steife Auslegung der Blattfeder kann der Keilschieber mit besonders hohen Verschiebekräften beaufschlagt werden. Das Federelement besteht vorzugsweise aus Gummi oder aus Kunststoff.

Gemäß einer besonders bevorzugten Ausführungsform der vorliegenden Erfindung wird vorgeschlagen, daß die Ankerwelle in dem Getriebegehäuse drehbar gelagert ist und daß das Stützlager ebenfalls in dem Getriebegehäuse angeordnet ist. Auf diese Weise kann die Ankerwelle sicher zwischen zwei Punkten in dem Teil des Gehäuses der Antriebsvorrichtung eingespannt werden, in dem die Getriebeeinheit angeordnet ist.

Eine bevorzugte Ausführungsform der vorliegenden Erfindung wird im Folgenden anhand der Zeichnungen näher erläutert. Es zeigen:
- Fig. 1: eine erfindungsgemäße Antriebsvorrichtung in Seitenansicht teilweise im Schnitt; und
- Fig. 2: die Antriebsvorrichtung aus Fig. 1 in Draufsicht teilweise im Schnitt.

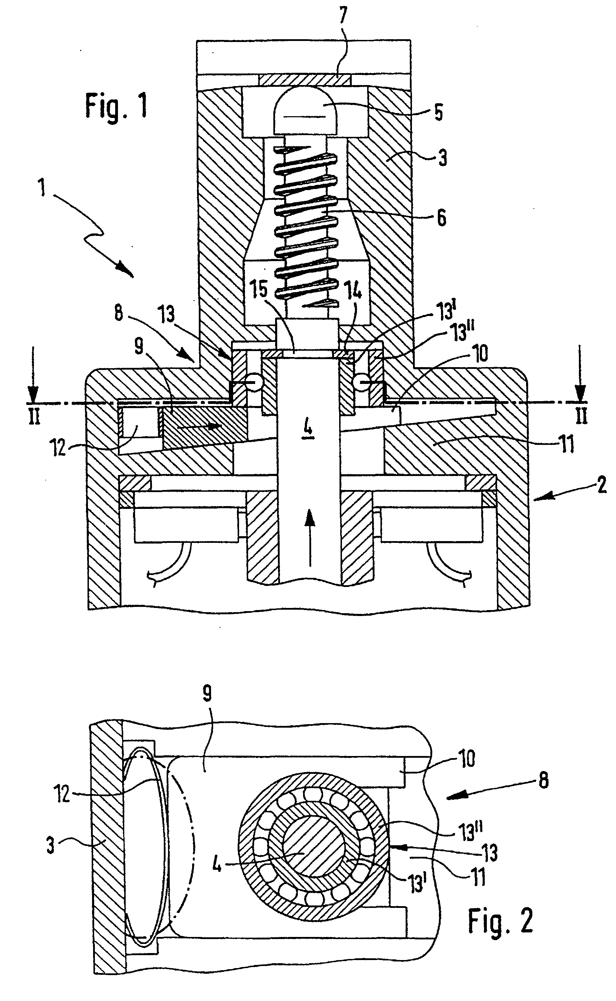

In Fig. 1 ist eine erfindungsgemäße Antriebsvorrichtung in ihrer Gesamtheit mit dem Bezugszeichen 1 gekennzeichnet. Die Antriebsvorrichtung 1 dient bspw. als Antrieb einer Scheibenwischanlage eines Kraftfahrzeuges. Sie weist ein Gehäuse 3 auf, in dem ein Elektromotor 2 angeordnet ist. Der Elektromotor 2 ist in einem als Motorgehäuse bezeichneten Teil des Gehäuses 3 untergebracht. Der Elektromotor 2 ist an einen als Getriebegehäuse bezeichneten Teil des Gehäuses 3 angeflanscht. Der Elektromotor 2 weist eine Ankerwelle 4 auf, die mit ihrem freien Ende 5 in das Getriebegehäuse hineinragt. Die Ankerwelle 4 weist an ihrem freien Ende eine Schneckenwelle 6 zum Antrieb eines Schneckenrades (nicht dargestellt) einer in dem Getriebegehäuse 3 untergebrachten Getriebeeinheit (nicht dargestellt) auf.

Die schrägen Flanken der Schneckenwelle 6 und des Schneckenrades führen während des Betriebs der Antriebsvorrichtung 1 zu einer auf der Ankerwelle 4 wirkenden Axialkraft. Die Richtung der Axialkraft ist abhängig von der Drehrichtung der Ankerwelle 4. In den Umkehrlagen des Scheibenwischers dreht sich die Richtung der Axialkraft an der Antriebswelle 4 kurzfristig um, weil die Getriebeeinheit in umgekehrter Kraftrichtung beansprucht wird. Aufgrund von Fertigungstoleranzen der Einzelteile der Antriebsvorrichtung 1 durch einen betriebsbedingten Verschleiss der Axiallagerelemente der Antriebswelle 4 kann es zu einem relativ großen Axialspiel der Axialwelle 4 in ihrer Axiallagerung kommen. Durch das Axialspiel kann es bei einer Richtungsumkehr zu einer ruckartigen Axialbewegung der Ankerwelle kommen, die zu störenden Geräuschen führt.

Um das Axialspiel der Ankerwelle 4 auszugleichen, wird bei der erfindungsgemäßen Antriebsvorrichtung 1 vorgeschlagen, dass das freie Ende 5 der Ankerwelle 4 über ein Stützlager 7 an dem Gehäuse 3 abgestützt ist. Die Antriebsvorrichtung 1 weist außerdem eine Axialkrafterzeugungseinrichtung 8 auf, die die Ankerwelle 4 mit einer auf das Stützlager 7 gerichteten Axialkraft beaufschlagt. Die Axialkrafterzeugungseinrichtung 8 weist einen Keilschieber 9 auf, der in radialer Richtung relativ zu der Ankerwelle 4 verschiebbar gelagert und an der Ankerwelle 4 abgestützt ist, so daß die Ankerwelle 4 durch Verschieben des Keilschiebers 9 mit einer in Richtung auf das Stützlager 7 gerichteten Axialkraft beaufschlagbar ist. Dazu wird der Keilschieber 9 mit einer in Richtung auf die Spitze 10 des Keilschiebers 9 gerichteten Verschiebekraft beaufschlagt. Das Gehäuse 3 weist einen sich radial nach innen erstreckenden kragenförmigen Bereich 11 auf, durch den die Ankerwelle 4 verläuft und an dem sich der Keilschieber 9 abstützt. Die Oberfläche des kragenförmigen Bereichs 11 weist eine Schräge auf, die der Schräge der Oberfläche des Keilschiebers 9 entspricht, an der er sich an dem kragenförmigen Bereich 11 abstützt.

Der Keilschieber 9 ist in Draufsicht (vgl. Fig. 2) im Wesentlichen U-förmig ausgebildet. Die Ankerwelle 4 verläuft in dem Spalt zwischen den beiden parallelen Balken des U. Der Keilschieber 9 wird mittels eines Federelements 12 mit der Verschiebekraft beaufschlagt.

Die Ankerwelle 4 ist in einem Wälzlager 13 gelagert. Das Wälzlager 13 weist einen auf der Ankerwelle 4 angeordneten Lagerinnenring 13' und einen in dem Gehäuse 3 angeordneten Lageraußenring 13'' auf. Das Wälzlager 13 ist zwischen der Schneckenwelle 6 und dem Elektromotor 2 angeordnet. Der Lageraußenring 13'' ist axial verschiebbar in dem Gehäuse 3 gelagert. Der Keilschieber 9 beaufschlagt den Lageraußenring 13'' mit einer in Richtung auf das Stützlager 7 gerichteten Axialkraft. Der Lagerinnenring ist auf der Ankerwelle 4 ortsfest angeordnet, so dass er eine in Richtung auf das Stützlager 7 gerichtete Axialkraft auf die Ankerwelle 4 übertragen kann. Auf diese Weise wird die Axialkraft des Keilschiebers 9 über das Wälzlager 13 auf die Ankerwelle 4 übertragen. Auf der Ankerwelle 4 ist auf der dem Keilschieber 9 entgegengesetzten Seite des Wälzlagers 13 eine Abstützscheibe 14 ortsfest angeordnet. Die Abstützscheibe 14 ist als ein Klemmring ausgebildet, der in einer in der Ankerwelle 4 ausgebildeten Ringnut 15 auf der Ankerwelle 4 angeordnet ist.

## Patentansprüche

1. Antriebsvorrichtung (1), insbesondere für eine Scheibenwischanlage eines Kraftfahrzeuges, die aufweist
- ein Gehäuse (3),
- einen in dem Gehäuse (3) angeordneten Elektromotor (2) mit einer drehbar gelagerten Ankerwelle (4),
- eine in dem Gehäuse (3) angeordnete Getriebeeinheit mit einer auf einem Abschnitt der Ankerwelle (4) angeordneten Schneckenwelle (6),
- ein in dem Gehäuse (3) angeordnetes Stützlager (7) zum Abstützen eines Endes (5) der Ankerwelle (4) an dem Gehäuse (3),
- eine Axialkrafterzeugungseinrichtung (8) zum Ausgleich des Axialspiels der Ankerwelle (4),
- wobei die Axialkrafterzeugungseinrichtung (8) einen in dem Gehäuse (3) in radialer Richtung relativ zu der Ankerwelle (4) verschiebbar gelagerten und an der Ankerwelle (4) abgestützten Keilschieber (9) aufweist, der durch Verschieben die Ankerwelle (4) mit einer in Richtung auf das Stützlager (7) gerichteten Axialkraft beaufschlagt,
**dadurch gekennzeichnet, dass** die Ankerwelle (4) in einem zwischen der Schneckenwelle (6) und dem Elektromotor (2) angeordneten Wälzlager (13) mit einem auf der Ankerwelle (4) angeordneten Lagerinnenring (13') und einem in dem Getriebegehäuse (3) oder in dem Motorgehäuse angeordneten Lageraußenring (13'') gelagert ist und **dass** der Keilschieber (9) das Wälzlager (13) mit einer in Richtung auf das Stützlager (7) gerichteten Axialkraft beaufschlagt.

2. Antriebsvorrichtung (1) nach Anspruch 1, **dadurch gekennzeichnet, daß** der Lageraußenring (13'') in dem Gehäuse (3) axial verschiebbar gelagert ist und **daß** der Keilschieber (9) den Lageraußenring (13'') mit einer in Richtung auf das Stützlager (7) gerichteten Axialkraft beaufschlagt.

3. Antriebsvorrichtung (1) nach Anspruch 2, **dadurch gekennzeichnet, daß** der Lägerinnenring (13') auf der Ankerwelle (4) ortsfest angeordnet ist, so **daß** er eine auf den Lageraußenring (13'') wirkende Axialkraft auf die Ankerwelle (4) übertragen kann.

4. Antriebsvorrichtung (1) nach Anspruch 3, **dadurch gekennzeichnet, daß** auf der Ankerwelle (4) auf der dem Keilschieber (9) entgegengesetzten Seite des Wälzlagers (13) eine Abstützscheibe (14) ortsfest angeordnet ist.

5. Antriebsvorrichtung (1) nach Anspruch 4, **dadurch gekennzeichnet, daß** die Abstützscheibe (14) als ein Klemmring ausgebildet ist, der in einer in der Ankerwelle (4) ausgebildeten Ringnut (15) auf der Ankerwelle (4) angeordnet ist.

6. Antriebsvorrichtung (1) nach einem der Ansprüche 1 bis 5, **dadurch gekennzeichnet, daß** der Keilschieber (9) im wesentlichen U-förmig ausgebildet ist, wobei die Ankerwelle (4) in dem Spalt zwischen den beiden parallelen Balken des U verläuft.

7. Antriebsvorrichtung (1) nach einem der Ansprüche 1 bis 6; **dadurch gekennzeichnet, daß** das Gehäuse (3) einen sich radial nach innen erstreckenden kragenförmigen Bereich (11) aufweist, durch den die Ankerwelle (4) verläuft und an dem sich der Keilschieber (9) abstützt.

8. Antriebsvorrichtung (1) nach Anspruch 7, **dadurch gekennzeichnet, daß** die Oberfläche des kragenförmigen Bereichs (11), auf der sich der Keilschieber (9) abstützt, eine Schräge aufweist, die der Schräge der Oberfläche des Keilschiebers (9) entspricht, an der er sich an dem kragenförmigen Bereich (11) abstützt.

9. Antriebsvorrichtung (11) nach einem der Ansprüche 1 bis 8, **dadurch gekennzeichnet, daß** der Keilschieber (9) mittels eines Federelements (12) mit einer Verschiebekraft beaufschlagbar ist.

10. Antriebsvorrichtung (1) nach Anspruch 9, **dadurch gekennzeichnet, daß** das Federelement (12) als eine Spiralfeder ausgebildet ist.

11. Antriebsvorrichtung (1) nach Anspruch 9, **dadurch gekennzeichnet, daß** das Federelement (12) als eine Blattfeder ausgebildet ist.

12. Antriebsvorrichtung (1) nach einem der Ansprüche 9 bis 11, **dadurch gekennzeichnet, daß** das Federelement (12) als eine Gummifeder ausgebildet ist.

13. Antriebsvorrichtung (1) nach einem der Ansprüche 9 bis 11, **dadurch gekennzeichnet, dass** das Federelement (12) als eine Kunststofffeder ausgebildet ist.

## Claims

1. Drive arrangement (1), for a windscreen wiper system of a motor vehicle in particular, which has
- a housing (3),
- an electric motor (2) arranged in the housing (3) with a rotatably supported rotor shaft (4),
- a gear unit arranged in housing (3) with a worm shaft (6) arranged on a section of the rotor shaft (4).
- a support bearing (7) arranged in the housing (3) for supporting one end (5) of the rotor shaft (4) on the housing (3),
- an axial force-generating device (8) for balancing the axial play on the rotor shaft (4),
- the axial force-generating device (8) having a wedge-type slide valve (9) movably supported in the radial direction relative to the rotor shaft (4) and supported at the rotor shaft (4), which when the rotor shaft (4) moves acts upon the rotor shaft with an axial force directed at the support bearing (7)
**characterised in that** the rotor shaft (4) is supported in a roller bearing (13) arranged between the worm shaft (6) and the electric motor (2) with an inner bearing raceway (13') arranged on the rotor shaft (4) and an outer bearing raceway (13'') arranged in the gear housing (3) or in the motor housing and **in that** the wedge-type slide valve (9) acts upon the roller bearing (13) with an axial force directed at the support bearing (7).

2. Drive arrangement (1) according to Claim 1, **characterised in that** the outer bearing raceway (13'') is axially movable in the housing (3) and **that** the wedge-type slide valve (9) acts upon the outer bearing raceway (13'') with an axial force directed at the supporting bearing (7).

3. Drive arrangement (1) according to Claim 2, **characterised in that** the inner bearing raceway (13') is rigidly arranged on the rotor shaft (4), so **that** it can transmit an axial force acting on the outer bearing raceway (13'') onto the rotor shaft (40).

4. Drive arrangement (1) according to Claim 3, **characterised in that** a support disk (14) is rigidly arranged on the rotor shaft (4) on the side of the roller bearing opposing the wedge-type slide valve (9).

5. Drive arrangement (1) according to Claim 4, **characterised in that** the support disk (14) is developed as a clamping ring, which is arranged in the annular T-slot (15) developed in the rotor shaft (4) on the rotor shaft (4).

6. Drive arrangement (1) according to one of Claims 1 to 5, **characterised in that** the wedge-type slide valve (9) is essentially U-shaped, the rotor shaft (4) running in the gap between the two parallel spars of the U.

7. Drive arrangement (1) according to one of Claims 1 to 6, **characterised in that** the housing (3) has a collar-shaped region (11) extending radially inwards, through which the rotor shaft (4) runs and on which the wedge-type slide valve (9) is supported.

8. Drive arrangement (1) according to Claim 7, **characterised in that** the surface of the collar-shaped region (11) on which the wedge-type slide valve (9) is supported, has a diagonal, which corresponds to the diagonal of the surface of the wedge-type slide valve (9), on which it is supported at the collar-shaped region (11).

9. Drive arrangement (11) according to one of Claims 1 to 8, **characterised in that** the wedge-type slide valve (9) can be acted upon with a displacement force by means of a spring element (12).

10. Drive arrangement (1) according to Claim 9, **characterised in that** the spring element (12) is developed as a helical spring.

11. Drive arrangement (1) according to Claim 9, **characterised in that** the spring element (12) is developed as a leaf spring.

12. Drive arrangement (1) according to one of Claims 9 to 11, **characterised in that** the spring element (12) is developed as a rubber spring.

13. Drive arrangement (1) according to one of Claims 9 to 11, **characterised in that** the spring element (12) is developed as a plastic spring.

## Revendications

1. Dispositif d'entraînement (1), notamment pour une installation d'essuie-glace pour un véhicule, qui présente :
- un boîtier (3),
- un moteur électrique (2) disposé dans le boîtier (3) avec un arbre d'induit (4) placé de manière à pouvoir tourner,
- une unité d'engrenages disposée dans le boîtier (3) avec une vis sans fin (6) disposée sur une section de l'arbre d'induit (4),
- une butée (7) disposé dans le boîtier (3) destiné à maintenir une extrémité (5) de l'arbre d'induit (4) au niveau du boîtier (3),
- un mécanisme générateur de forces axiales (8) destiné à équilibrer le jeu axial de l'arbre d'induit (4),
- moyennant quoi le mécanisme générateur de forces axiales (8) présente un élément coulissant oblique (9) placé de manière à pouvoir se déplacer dans le boîtier (3) dans le sens radial par rapport à l'arbre d'induit (4) et prenant appui au niveau de l'arbre d'induit (4), qui sollicite, par un déplacement, l'arbre d'induit (4), avec une force axiale s'exerçant en direction de la butée (7),
**caractérisé en ce que** l'arbre d'induit (4) est placé dans un palier à roulement (13) disposé entre la vis sans fin (6) et le moteur électrique (2) avec un anneau intérieur de palier (13') disposé sur l'arbre d'induit (4) et un anneau extérieur du palier (13'') disposé dans le boîtier d'engrenages (3) ou le boîtier du moteur et **en ce que** l'élément coulissant oblique (9) sollicite le palier à roulement (13) avec une force axiale orientée vers la butée (7).

2. Dispositif d'entraînement (1) selon la revendication 1, **caractérisé en ce que** l'anneau extérieur du palier (13'') est placé de manière à pouvoir se déplacer axialement dans le boîtier (3) et **en ce que** l'élément coulissant oblique (9) sollicite l'anneau extérieur du palier (13'') avec une force axiale orientée vers la butée (7).

3. Dispositif d'entraînement (1) selon la revendication 2, **caractérisé en ce que** l'anneau intérieur du palier (13') est disposé de manière fixe sur l'arbre d'induit (4), de telle sorte qu'il puisse transmettre à l'arbre d'induit (4) une force axiale s'exerçant sur l'anneau extérieur du palier (13'').

4. Dispositif d'entraînement (1) selon la revendication 3, **caractérisé en ce qu'**un disque de support (14) est disposé de manière fixe du côté opposé à l'élément coulissant oblique (9) du palier à roulement (13).

5. Dispositif d'entraînement (1) selon la revendication 4, **caractérisé en ce que** le disque de support (14) est conçu sous la forme d'une bague de serrage, qui est disposée dans une rainure annulaire (15) formée dans l'arbre d'induit (4).

6. Dispositif d'entraînement (1) selon l'une quelconque des revendications 1 à 5, **caractérisé en ce que** l'élément coulissant oblique (9) est conçu sensiblement en forme de U, moyennant quoi le bras d'induit (4) s'étend dans la fente entre les deux barres parallèles du U.

7. Dispositif d'entraînement (1) selon l'une quelconque des revendications 1 à 6, **caractérisé en ce que** le boîtier (3) présente une zone en forme de col (11) s'étendant radialement vers l'intérieur, par laquelle passe l'arbre d'induit, et au niveau de laquelle prend appui l'élément coulissant oblique (9).

8. Dispositif d'entraînement (1) selon la revendication 7, **caractérisé en ce que** la surface de la zone en forme de col (11), au niveau de laquelle prend appui l'élément coulissant oblique (9), présente une inclinaison, qui correspond à l'inclinaison de la surface de l'élément coulissant oblique (9), au niveau de laquelle il prend appui dans la zone en forme de col (11).

9. Dispositif d'entraînement (1) selon l'une quelconque des revendications 1 à 8, **caractérisé en ce que** l'élément coulissant oblique (9) peut être sollicité à l'aide d'un élément à ressort (12) ayant une force de déplacement.

10. Dispositif d'entraînement (1) selon la revendication 9, **caractérisé en ce que** l'élément de ressort (12) est conçu sous la forme d'un ressort hélicoïdal.

11. Dispositif d'entraînement (1) selon la revendication 9, **caractérisé en ce que** l'élément de ressort (12) est conçu sous la forme d'un ressort à lames.

12. Dispositif d'entraînement (1) selon l'une quelconque des revendications 9 à 11, **caractérisé en ce que** l'élément de ressort (12) est conçu sous la forme d'un ressort en caoutchouc.

13. Dispositif d'entraînement (1) selon l'une quelconque des revendications 9 à 11, **caractérisé en ce que** l'élément de ressort (12) est conçu sous la forme d'un ressort en plastique.
